# EUROPÄISCHE PATENTANMELDUNG

(11) **EP 3 222 127 A1**
(43) Veröffentlichungstag der Anmeldung: **27.09.2017**
(21) Anmeldenummer: 17401023.1
(22) Anmeldetag: 15.03.2017
(51) Int. Cl.: A01B 15/04, A01B 35/22, A01C 5/06

(54) **LANDWIRTSCHAFTLICHES IN DEN BODEN EINGREIFENDES SCHARWERKZEUG**

(30) Priorität: 23.03.2016 DE 102016105410
(71) Anmelder: Amazonen-Werke H. Dreyer GmbH & Co. KG, 49205 Hasbergen (DE)
(72) Erfinder: Wilken, Martin, 26123 Oldenburg (DE); Hamann, Malte, 26131 Oldenburg (DE)

(57) **Zusammenfassung**

Landwirtschaftliches in den Boden eingreifendes Scharwerkzeug, insbesondere Sä- und/oder Düngerschar, Grubberschar mit einem am unteren Ende des Werkzeugs angeordnetem schmalen Zinken, der auf seiner der Fortbewegungsrichtung zugewandten Seite eine als Scharschneide und auf seinen beiden Seitenflächen zumindest einen als aufrecht verlaufendes streifenförmiges Verschleißschutzelement ausgebildeten Verschleißschutz aus verschleißfestem Material, wie Hartmetallplatte oder mit einem Laser aufgetragenes verschleißfestes Material, aufweist. Um mit einfachen Maßnahmen insbesondere einem besseren Verschleißschutz auf den Seitenflächen eines landwirtschaftlichen in den Boden eingreifenden Scharwerkzeuges zu schaffen, ist vorgesehen, dass der auf die Seitenfläche aufgebrachte Verschleißschutz mehrere in Fortbewegungsrichtung zueinander beabstandete streifenförmige Verschleißschutzelemente aufweist.

## Beschreibung

Die Erfindung betrifft ein landwirtschaftliches in den Boden eingreifendes Scharwerkzeug gemäß des Oberbegriffes des Patentanspruches 1.

Ein derartiges landwirtschaftliches in den Boden eingreifendes Scharwerkzeug ist in der US 9 066 462 B2 beschrieben. Dieses Scharwerkzeug ist als Säschar ausgebildet. Auf der der Fortbewegungsrichtung zugewandten Seite des Säschares ist ein als Scharschneide ausgebildetes und den in Fortbewegungsrichtung weisenden vorderen unteren Bereich schützendes streifenförmiges Verschleißschutzelement in Form einer Hartmetallplatte angebracht. Weiterhin ist auf jeder Seite der Säscharspitze beabstandet zu dem auf der Fortbewegungsrichtung zugewandten Seite des Säschares ein aufrecht verlaufendes Verschleißschutzelement in Form einer eingesetzten Hartmetallplatte angeordnet. Durch die Anordnung der Hartmetallplatte auf der Vorderseite des Säschares wird ein Schutz des Säschares in diesem Bereich erreicht. Der Unterseite des Säschares wird wegen fehlenden Verschleißschutz ausgewaschen. Durch die Aufbringung jeweils einer Hartmetallplatte wird nur ein geringer seitlicher Verschleißschutz erreicht, der jedoch bei sehr aggressiven Böden nicht ausreichend ist.

Der Erfindung liegt die Aufgabe zu Grunde, mit einfachen Maßnahmen insbesondere einen besseren Verschleißschutz auf den Seitenflächen eines landwirtschaftlichen in den Boden eingreifenden Scharwerkzeuges zu schaffen.

Diese Aufgabe wird erfindungsgemäß dadurch gelöst, dass der auf die Seitenfläche aufgebrachte Verschleißschutz mehrere in Fortbewegungsrichtung zueinander beabstandete streifenförmige Verschleißschutzelemente aufweist.

Infolge dieser Maßnahme lassen sich je nach Erfordernis eine entsprechende Anzahl zueinander beabstandeter streifenförmiger Verschleißschutzelemente auf die jeweilige Seitenfläche zur Erreichung eines angepassten optimalen Schutzes der Seitenflächen des Scharwerkzeuges erreichen. Die Aufbringung dieser mehreren zueinander beabstandeter streifenförmiger Verschleißschutzelemente lässt sich äußerst vorteilhaft durch ein Laserauftragsverfahren von einem Pulver aus Wolframcarbid und Eisen oder Nickel umzusetzen. Dieses Pulver wird durch einen Laser bei dem Auftragsverfahren geschmolzen und so mit dem Material des Scharwerkzeuges verschmolzen. Die Anwendung eines derartigen Laserauftragsverfahrens erlaubt es bei geringem Wärmeeintrag jede gewünschte Kontur auf die Oberfläche in zeichnender Weise aufzubringen. Hierdurch kann sowohl die der Fortbewegungsrichtung zugewandte Seite des Werkzeuges wie auch die Seitenflächen in gewünschter Weise mit einem Verschleißschutz beschichtet werden. Neben der Form kann auch die Beschichtung stärke für jeden Bereich auf der Oberfläche angepasst und/oder unterschiedlich ausgeführt werden. Somit können auf besonders flexible und kostengünstige Weise die jeweiligen Bereiche eines Scharwerkzeuges mit ein an Verschleißschutz versehen werden.

Durch die beabstandete und erhöhte Anordnung der streifenförmigen Verschleißschutzelemente auf den Seitenflächen des Scharwerkzeuges gegenüber den nicht beschichteten Bereichen der Seitenflächen des Scharwerkzeuges setzt sich während der Bodenbearbeitung durch das Scharwerkzeug Boden in den Bereichen zwischen den streifenförmigen Verschleißschutzelementen. Durch den sich in den Bereichen zwischen den streifenförmigen Verschleißschutzelementen ansammelnden Boden wird ein verbesserter Verschleißschutz nach dem bekannten "Soil to Soil Effekt", bei dem Boden auf Boden gleitet und nicht auf dem Material des Scharwerkzeuges, erreicht. So lässt sich durch eine geschickte Anordnung der streifenförmigen Verschleißschutzelemente in beabstandeter Weise zueinander entsprechend des Verschleißverhaltens ein äußerst gleichmäßiger Verschleiß des Scharwerkzeuges bei einer langen Standzeit generieren, umso die Funktion und Arbeitsqualität des Scharwerkzeuges über einen sehr langen Zeitraum auf einem hohen Niveau zu halten.

Um den unteren Bereich der Seitenflächen des Scharwerkzeuges optimiert zu schützen, ist vorgesehen, dass auf den Seitenflächen unterhalb der aufrecht verlaufenden streifenförmigen Verschleißschutzelemente ein zumindest annähernd parallel zur unteren Seitenkante des Zinken verlaufendes streifenförmiges Verschleißschutzelement angeordnet ist.

In einfacher Weise lässt sich die vorteilhafte beabstandete Anordnung der streifenförmigen Verschleißschutzelemente auf den Seitenflächen dadurch schaffen, dass die auf den Seitenflächen angeordneten streifenförmigen Verschleißschutzelemente kammartig ausgebildet und/oder zueinander angeordnet sind.

In einer Ausführungsform ist vorgesehen, dass die auf den Seitenflächen angeordneten streifenförmigen Verschleißschutzelemente zumindest teilweise in den in dem Zinken angeordneten Vertiefungen und/oder Aussparungen angebracht sind.

Die kammartige Anordnung der streifenförmigen Verschleißschutzelemente auf den Seitenflächen lässt sich dadurch erreichen, dass die auf den Seitenflächen angeordneten streifenförmigen Verschleißschutzelemente zumindest annähernd senkrecht verlaufend angeordnet sind.

Im vorteilhafterweise lassen sich die Verschleißschutzelemente dadurch auf die entsprechenden Bereiche des Scharwerkzeuges aufbringen, dass auf der der Fortbewegungsrichtung zugewandten Seite des Zinkens und/oder auf den Seitenflächen angeordneten streifenförmigen Verschleißschutzelemente mittels eines Laserschweißbeschichtungsverfahrens aufgebracht sind.

Eine vorteilhafte Ausgestaltung des Scharwerkzeuges zur Schaffung von schmalen Furchen, insbesondere für das Striptill-Verfahren lässt sich dadurch erreichen, dass die Länge des Zinken in Fortbewegungsrichtung zumindest das dreifache der Breite des Zinkens quer zur Fortbewegungsrichtung beträgt.

Ein vorteilhafter Verschleißschutz auf den Seitenflächen des Scharwerkzeuges kann in einfacher Weise durch eine Anordnung der Verschleißschutzelemente zueinander dadurch erreicht werden, dass zumindest die in der Fortbewegungsrichtung zugewandten ersten Hälfte der auf den Seitenflächen angeordneten streifenförmigen Verschleißschutzelemente U- und/oder W-förmig ausgebildet sind.

Für manche Einsatzfälle zur Optimierung des Verschleißschutzes auf den Seitenflächen ist vorgesehen, dass zwischen den unteren Enden der zumindest in der Fortbewegungsrichtung zugewandten ersten Hälfte der auf den Seitenflächen angeordneten aufrecht verlaufenden streifenförmigen Verschleißschutzelemente querverlaufende streifenförmige Verschleißschutzelemente angeordnet sind.

In vorteilhafter Weise lassen sich bei einem Laserauftragsverfahren der Verschleißschutzelemente diese dadurch in der gewünschten Weise auftragen, dass zumindest die in der Fortbewegungsrichtung zugewandten ersten Hälfte der auf den Seitenflächen angeordneten aufrecht verlaufenden streifenförmigen Verschleißschutzelemente an ihren unteren Enden durch querverlaufende streifenförmigen Verschleißschutzelemente miteinander verbunden sind.

Um einen ausreichenden Verschleißschutz auch auf der Unterseite des Scharwerkzeuges zu gewährleisten, ist vorgesehen, dass auf der Unterseite des Scharwerkzeuges ein an der Scharschneide beginnender und sich über die gesamte untere Scharbreite erstreckender als Verschleißschutzelement ausgebildeter Verschleißschutz aus verschleißfestem Material, wie Hartmetallplatte oder mit einem Laser aufgetragenes verschleißfestes Material, aufgebracht ist.

Eine vorteilhafte Aufbringung des Verschleißschutzes auf der Vorderseite des Scharwerkzeuges lässt sich dadurch umsetzen, dass der auf seiner der Fortbewegungsrichtung des Scharwerkzeuges zugewandten Seite aufgebrachte Verschleißschutz sich über die gesamte Breite des Scharwerkzeuges und seiner Scharschneide erstreckt.

Weitere Einzelheiten der Erfindung sind der Beispielsbeschreibung und den Zeichnungen zu entnehmen. Die Zeichnungen zeigen
- Fig.1: das als Zinkensäschar ausgebildete erfindungsgemäße Bodenbearbeitungswerkzeug in perspektivischer Darstellung, in der Ansicht schräg von vorne links,
- Fig.2: das Zinkensäschar in perspektivischer Darstellung in der Ansicht schräg von vorne rechts,
- Fig.3: das Zinkensäschar in der Ansicht von vorn,
- Fig.4: das Zinkensäschar in der Seitenansicht,
- Fig.5: der untere Bereich des Zinkensäschares in der Darstellungsweise nach Fig.4 in vergrößertem Maßstab,
- Fig.6: ein weiteres Zinkensäschar in perspektivischer Darstellung in der Ansicht schräg von vorne links,
- Fig.7: das Zinkensäschar nach Fig. 6 in der Seitenansicht von rechts,
- Fig.8: das Zinkensäschar in der Seitenansicht von links,
- Fig.9: der untere Bereich des Zinkensäschares in der Darstellungsweise nach Fig.8 in vergrößertem Maßstab,

Das als Zinkensäschar 1 ausgebildete Bodenbearbeitungswerkzeug für eine landwirtschaftliche Maschine, wie Sämaschine und/oder Grubber, ist mittels durch die in dem Haltestiel 2 des Bodenbearbeitungswerkzeug 1 angeordneten Durchbrüche 3 zu steckenden Befestigungsmittel, beispielsweise Schrauben in nicht dargestellter Weise an einem ebenfalls nicht dargestellten Werkzeughalter befestigt. Das Bodenbearbeitungswerkzeug 1 weist an seinem unteren Ende einen vorderen zinkenartigen Bereich 4 auf, an dem sich ein Bodenführungsbereich 5 zum Führen des Bodens anschließt. Dieser Bodenführungsbereich 5 kann auch als Führungsplatte ausgebildet sein. Dieser Bodenführungsbereich 5 führt den von den zinkenartigen Bereich 4 aufgebrochenen Boden in gewünschter Weise nach oben, so dass eine Krümelung des Bodens stattfindet und im Ausführungsbeispiel eine Säfurche zur Ablage des zubringenden Saatgutes und/oder Düngemittels geschaffen wird.

Am unteren Ende des Zinkensäschares 1 weist dieser im zinkenartigen Bereich 4 einen schmalen Zinken 6 mit der Zinkenspitze 7 auf.

Auf seiner der Fortbewegungsrichtung 8 zugewandten Seite ist eine als Scharschneide 9 im Bereich der Zinkenspitze 7 vorhanden. Auf der Zinkenspitze 7 sind zur Bildung der Scharschneide 9 und auf den beiden Seitenflächen 10 als aufrecht verlaufende streifenförmige Verschleißschutzelemente 11 ausgebildeter Verschleißschutz aus verschleißfestem Material, wie Hartmetallplatte oder mit einem Laser aufgetragenes verschleißfestes Material, aufgebracht. Der auf die Seitenflächen 10 aufgebrachte Verschleißschutz weist mehrere in Fortbewegungsrichtung 8 zueinander beabstandete streifenförmige Verschleißschutzelemente 11 auf. Auf den Seitenflächen 10 ist unterhalb der aufrecht verlaufenden streifenförmigen Verschleißschutzelemente 11 ein zumindest annähernd parallel zur unteren Seitenkante 12 des Zinkens 1 verlaufendes streifenförmiges Verschleißschutzelement 13 angeordnet.

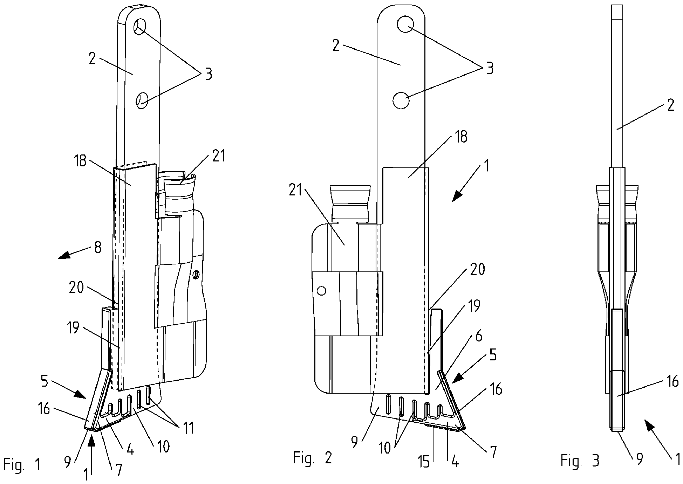

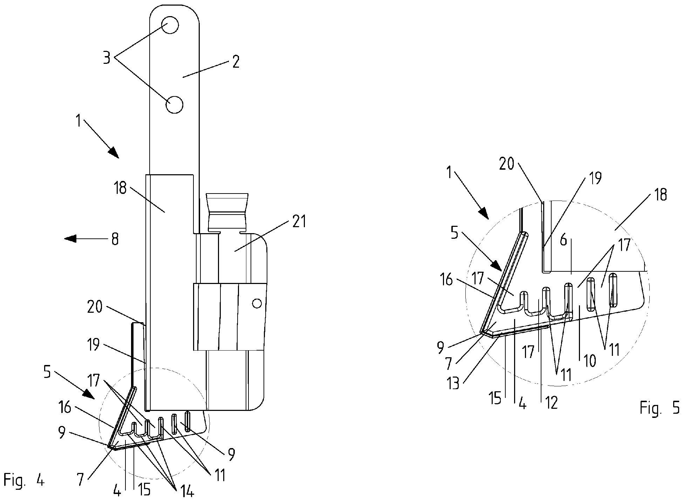

Die auf den Seitenflächen 10 angeordneten streifenförmigen Verschleißschutzelemente 11 sind kammartig ausgebildet und/oder zueinander angeordnet, wie die Fig.1, 2, 4 und 5 zeigen. Die auf den Seitenflächen 10 angeordneten streifenförmigen Verschleißschutzelemente 11 können zumindest teilweise in den in dem Zinken 1 angeordneten Vertiefungen und/oder Aussparungen angebracht sein. Die auf den Seitenflächen 10 angeordneten streifenförmigen Verschleißschutzelemente 11 sind zumindest annähernd senkrecht verlaufend angeordnet.

Die auf der der Fortbewegungsrichtung 8 zugewandten Seite des Zinkens 1 und auf den Seitenflächen 10 angeordneten streifenförmigen Verschleißschutzelemente 11 sind mittels eines Laserschweißbeschichtungsverfahrens aufgebracht.

Die Länge des Zinkens 1 beträgt in Fortbewegungsrichtung 8 zumindest das dreifache der Breite des Zinkens quer zur Fortbewegungsrichtung 8.

Die in der Fortbewegungsrichtung 8 zugewandten ersten Hälfte der auf den Seitenflächen 10 angeordneten streifenförmigen Verschleißschutzelemente 11 sind U- und/oder W-förmig ausgebildet. Hierzu sind zwischen den unteren Enden der zumindest in der Fortbewegungsrichtung 8 zugewandten ersten Hälfte der auf den Seitenflächen 10 angeordneten aufrecht verlaufenden streifenförmigen Verschleißschutzelemente 11 querverlaufende streifenförmige Verschleißschutzelemente 14 angeordnet. Die in der Fortbewegungsrichtung 8 zugewandten ersten Hälfte der auf den Seitenflächen 10 angeordneten aufrecht verlaufenden streifenförmigen Verschleißschutzelemente 11 sind an ihren unteren Enden durch querverlaufende streifenförmige Verschleißschutzelemente 14 miteinander verbunden.

Auf der Unterseite des Scharwerkzeuges 1 ein an der Scharschneide 9 beginnender und sich über die gesamte untere Scharbreite erstreckender als Verschleißschutzelement 15 ausgebildeter Verschleißschutz aus verschleißfestem Material, wie Hartmetallplatte oder mit einem Laser aufgetragenes verschleißfestes Material, aufgebracht. Der auf seiner der Fortbewegungsrichtung 8 des Scharwerkzeuges 1 zugewandten Seite aufgebrachte Verschleißschutz 16 erstreckt sich über die gesamte Breite des Scharwerkzeuges 1 und seiner Scharschneide 9.

Der gegenüber dem Stand der Technik wesentlich verbesserte Verschleißschutz zur Erreichung einer wesentlich höheren Standzeit ergibt sich durch den "Soil to Soil Effekt", bei dem Boden auf Boden gleitet.

Durch die beabstandete und erhöhte Anordnung der streifenförmigen Verschleißschutzelemente 11 auf den Seitenflächen 10 des als Zinkensäschar 1 ausgebildeten Scharwerkzeuges gegenüber den nicht beschichteten Bereichen 17 der Seitenflächen 10 des Scharwerkzeuges 1 setzt sich während der Bodenbearbeitung durch das Scharwerkzeug Boden in den Bereichen 17 zwischen den streifenförmigen Verschleißschutzelementen 11. Durch den sich in den Bereichen zwischen den streifenförmigen Verschleißschutzelementen 11 an sammelnden Boden wird ein verbesserter Verschleißschutz nach dem bekannten "Soil to Soil Effekt", bei dem Boden auf Boden gleitet und nicht auf dem Material des Scharwerkzeuges 1, erreicht. So lässt sich durch eine geschickte erfindungsgemäße Anordnung der streifenförmigen Verschleißschutzelemente 11 in beabstandeter Weise zueinander entsprechend des Verschleißverhaltens ein äußerst gleichmäßiger Verschleiß des Scharwerkzeuges 1 generieren, umso die Funktion und Arbeitsqualität des Scharwerkzeuges 1 über einen sehr langen Zeitraum auf einem hohen Niveau zu halten.

Über den Haltestiel 2 ist der U-förmig gebogene Halter 18 bis in die Nähe des unteren Endes des Zinkensäschares 1 geschoben. Hierzu weist das Schar 1 in seinem vorderen Bereich die schlitzförmige Aussparung 18 zur Aufnahme des vorderen Steges 20 des Halters 18 auf. Auf der Rückseite des Halters 18 ist das Endstück 21 der Materialzuleitung zur Abgabe des zugeführten Saatgutes und/oder Düngemittels in die vom Zinkensäschar 1 in den Boden gezogenen Säfurche befestigt.

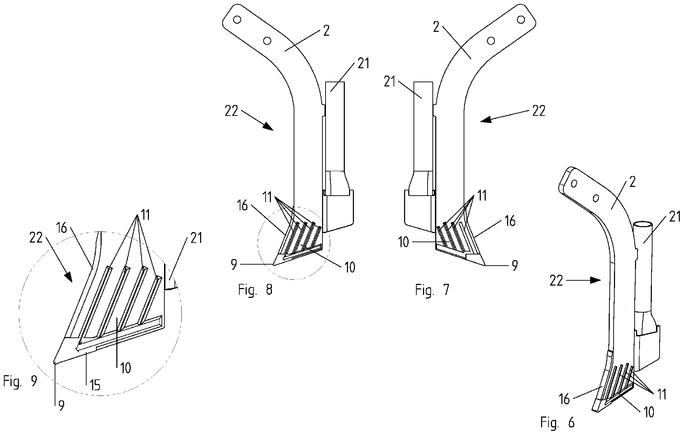

Das Zinkensäschar 22 nach den Fig.6 bis 9 unterscheidet sich von dem Zinkensäschar 1 nach den Fig.1 bis 5 durch die andere Befestigung des Endstückes 21 der Materialzuleitung an dem Haltestiel 2 durch einfaches direktes Anschweißen.

Außerdem sind die streifenförmigen Verschleißschutzstreifen 11 auf den Seitenflächen 10 in einer anderen Zuordnung und Ausrichtung, jedoch auch in beabstandeter Weise zueinander aufgebracht und angeordnet, so dass auch hier der vorbeschriebene "Soil to Soil Effekt" mit seinen ebenfalls vorbeschrieben erfindungsgemäßen Vorteilen erreicht wird.

## Patentansprüche

1. Landwirtschaftliches in den Boden eingreifendes Scharwerkzeug (1), insbesondere Sä- und/oder Düngerschar, Grubberschar mit einem am unteren Ende des Werkzeugs (1) angeordnetem schmalen Zinken (4), der auf seiner der Fortbewegungsrichtung (8) zugewandten Seite eine als Scharschneide (9) und auf seinen beiden Seitenflächen (10) zumindest einen als aufrecht verlaufendes streifenförmiges Verschleißschutzelement (11) ausgebildeten Verschleißschutz aus verschleißfestem Material, wie Hartmetallplatte oder mit einem Laser aufgetragenes verschleißfestes Material, aufweist, **dadurch gekennzeichnet, dass** der auf die Seitenfläche (10) aufgebrachte Verschleißschutz mehrere in Fortbewegungsrichtung (8) zueinander beabstandete streifenförmige Verschleißschutzelemente (11) aufweist.

2. Scharwerkzeug nach Anspruch 1, **dadurch gekennzeichnet, dass** auf den Seitenflächen (10) unterhalb der aufrecht verlaufenden streifenförmigen Verschleißschutzelemente (11) ein zumindest annähernd parallel zur unteren Seitenkante (13) des Zinkens (1) verlaufendes streifenförmiges Verschleißschutzelement (15) angeordnet ist.

3. Scharwerkzeug nach zumindest einem der vorstehenden Ansprüche, **dadurch gekennzeichnet, dass** die auf den Seitenflächen (10) angeordneten streifenförmigen Verschleißschutzelemente (11) kammartig ausgebildet und/oder zueinander angeordnet sind.

4. Scharwerkzeug nach zumindest einem der vorstehenden Ansprüche, **dadurch gekennzeichnet, dass** die auf den Seitenflächen (10) angeordneten streifenförmigen Verschleißschutzelemente (11) zumindest teilweise in den in dem Zinken (1) angeordneten Vertiefungen und/oder Aussparungen angebracht sind.

5. Scharwerkzeug nach zumindest einem der vorstehenden Ansprüche, **dadurch gekennzeichnet, dass** die auf den Seitenflächen (10) angeordneten streifenförmigen Verschleißschutzelemente (11) zumindest annähernd senkrecht verlaufend angeordnet sind.

6. Scharwerkzeug nach zumindest einem der vorstehenden Ansprüche, **dadurch gekennzeichnet, dass** auf der der Fortbewegungsrichtung (8) zugewandten Seite des Zinkens und/oder auf den Seitenflächen (10) angeordneten streifenförmigen Verschleißschutzelemente (11, 16) mittels eines Laserschweißbeschichtungsverfahrens aufgebracht sind.

7. Scharwerkzeug nach zumindest einem der vorstehenden Ansprüche, **dadurch gekennzeichnet, dass** die Länge des Zinkens (1) in Fortbewegungsrichtung (8) zumindest das dreifache der Breite des Zinkens (1) quer zur Fortbewegungsrichtung (8) beträgt.

8. Scharwerkzeug nach zumindest einem der vorstehenden Ansprüche, **dadurch gekennzeichnet, dass** zumindest die in der Fortbewegungsrichtung (8) zugewandten ersten Hälfte der auf den Seitenflächen (10) angeordneten streifenförmigen Verschleißschutzelemente (11) U- und/oder W-förmig ausgebildet sind.

9. Scharwerkzeug nach zumindest einem der vorstehenden Ansprüche, **dadurch gekennzeichnet, dass** zwischen den unteren Enden der zumindest in der Fortbewegungsrichtung (8) zugewandten ersten Hälfte der auf den Seitenflächen (10) angeordneten aufrecht verlaufenden streifenförmigen Verschleißschutzelemente (11) querverlaufende streifenförmige Verschleißschutzelemente (14) angeordnet sind.

10. Scharwerkzeug nach zumindest einem der vorstehenden Ansprüche, **dadurch gekennzeichnet, dass** zumindest die in der Fortbewegungsrichtung (8) zugewandten ersten Hälfte der auf den Seitenflächen (10) angeordneten aufrecht verlaufenden streifenförmigen Verschleißschutzelemente (11) an ihren unteren Enden durch querverlaufende streifenförmigen Verschleißschutzelemente (14) miteinander verbunden sind.

11. Scharwerkzeug nach zumindest einem der vorstehenden Ansprüche, **dadurch gekennzeichnet, dass** auf der Unterseite des Scharwerkzeuges (1) ein an der Scharschneide (9) beginnender und sich über die gesamte untere Scharbreite erstreckender als Verschleißschutzelement (15) ausgebildeter Verschleißschutz aus verschleißfestem Material, wie Hartmetallplatte oder mit einem Laser aufgetragenes verschleißfestes Material, aufgebracht ist.

12. Scharwerkzeug nach zumindest einem der vorstehenden Ansprüche, **dadurch gekennzeichnet, dass** der auf seiner der Fortbewegungsrichtung (8) des Scharwerkzeuges (1) zugewandten Seite aufgebrachte Verschleißschutz (16) sich über die gesamte Breite des Scharwerkzeuges (1) und seiner Scharschneide (9) erstreckt.
